# EUROPEAN PATENT APPLICATION

(11) **EP 4 575 402 A1**
(43) Date of publication of application: **25.06.2025**
(21) Application number: 24155391.6
(22) Date of filing: 01.02.2024
(51) Int. Cl.: G01C 21/00, G06F 16/29

(54) **METHODS OF DETERMINING GEOMETRIES OF LANE BOUNDARIES AND METHODS OF DETERMINING POSITIONS OF LANE CENTRELINES**

(30) Priority: 20.12.2023 IN 202311087200
(71) Applicant: TomTom Global Content B.V., 1011 AC Amsterdam (NL)
(72) Inventor: SONI, Abhilshit, 1011 AC Amsterdam (NL); VAN HULST, Johannes Michael, 1011 AC Amsterdam (NL); LENARTOWICZ, Grzegorz Michai, 1011 AC Amsterdam (NL); SAMARPAN, Rai, 1011 AC Amsterdam (NL); WANG, Yu, Amsterdam, 1011AC (NL)
(74) Representative: Dehns

(57) **Abstract**

Disclosed is a method in which plural sets of data representing a plurality of separate observations of lane boundaries within the road section are obtained. An initial candidate group of sets of data is identified based on corresponding data points within the sets of data fitting into the same tile or in n-level neighbouring tiles of a spatial indexing system. A cluster of sets of data that relate to the same, first lane boundary is determined from the identified initial candidate group of sets of data by calculating respective distances between corresponding data points for different sets of data and comparing the calculated distances to a distance threshold. A geometry of the first lane boundary is determined using the cluster of sets of data that have been determined to relate to the same, first lane boundary.

## Description

The technology described herein relates to techniques for use in digital mapping and, in particular, to methods of determining geometries of lane boundaries within road sections in geographical areas represented by digital maps. The technology described herein also relates to methods for determining positions of lane centrelines within road sections in geographical areas represented by digital maps.

Lane boundaries mark the edges of one or more lanes along a path of travel, e.g. on a road or highway, and are often physically indicated by (broken or unbroken) lines on the surface of the path of travel. Lane centrelines indicate the midpoint between two lane boundaries of a respective lane. In contrast to lane boundaries, lane centrelines are not usually indicated physically on the surface of the path of travel.

It is useful to be able to accurately represent the geometries (e.g. geographical locations, orientations and/or extents) of lane boundaries and/or the positions of lane centrelines in digital maps, e.g., and especially, for so-called High Definition (HD) maps for use in navigation for advanced driver-assistance systems and autonomous vehicles. For instance, in order to support advanced driver assistance system (ADAS) or autonomous driving functionally, a High Definition (HD) map may provide a more detailed three-dimensional view of not just the road geometry (as may be required for more traditional, basic navigation support) but also the lane geometry, including an indication of the lane centreline.

High Definition (HD) maps are typically captured using an array of sensors, such as LIDAR, digital cameras, etc., that may be provided on-board vehicles (which may be dedicated mapping fleet vehicles but at least some of this data could also be 'crowdsourced' from other road users). Other methods of obtaining data for use in generating HD maps make use of GNSS data, such as GPS data, to track vehicle trajectories.

To determine the geometry of a lane boundary, data relating to the lane boundary is collected and processed. Large quantities of data may be collected for processing, and the collected data may include anomalies and "noise" that can introduce inaccuracies into the determination of the actual geometry of the lane boundary. Similarly, to determine the position of a lane centreline, (large quantities of) data relating to the lane centreline is collected and processed. Processing of such large quantities of data, including identifying and mitigating aberrations within the data, can be computationally expensive and time-consuming.

The Applicant has realised that there is scope for improvements in methods of determining geometries of lane boundaries and methods of determining positions of lane boundaries within road sections in geographical areas represented by digital maps.

Thus, in a first aspect, a method is provided of determining geometries of lane boundaries within a road section within a geographical area represented by a digital map, wherein the lane boundaries divide the road section into a set of one or more lanes, the method comprising:
obtaining plural sets of data representing a plurality of separate observations of lane boundaries within the road section, wherein different ones of the plural sets of data may represent either observations of the same or of different lane boundaries within the road section, and wherein each set of data includes a respective series of data points spaced along the road section and representing the position of the lane boundary;
identifying from the plural sets of data representing separate observations of lane boundaries within the road section an initial candidate group of sets of data for which it is to be further determined whether the sets of data should be clustered together as relating to the same, first lane boundary,
   wherein the identifying of the candidate group of sets of data is performed using a spatial indexing system in which the geographical area including the road section is subdivided into a plurality of tiles, each representing a respective subarea of the geographical area, and wherein the positions of the tiles are spatially indexed relative to each other such that it can be determined which tiles are adjacent to each other, wherein sets of data are identified as being part of the initial candidate group of sets of data based on corresponding ones of the data points for the sets of data fitting into the same tile or in n-level neighbouring tiles of the spatial indexing system;
determining, from the sets of data within the identified initial candidate group of sets of data, a cluster of sets of data that relate to the same, first lane boundary by calculating respective distances between corresponding data points for different sets of data and
comparing the calculated distances to a distance threshold; and
determining, using the cluster of sets of data that have been determined to relate to the same, first lane boundary, a geometry of the first lane boundary.

The present disclosure generally relates to processing data for use in generating and/or updating digital maps. Such digital maps typically consist of a set of road segments (or other navigable elements) as well as nodes connecting the road segments together to form a suitable graph representation of the underlying road network. Various other features associated with the road network may also be included within the digital map. This may include, for example, and in the described examples does include, a lane model describing the lane geometries. In order to generate digital maps with a higher degree of accuracy, large quantities of data may need to be, and typically will be, processed in connection with the features to be included in the map. A first aspect of the present disclosure particularly relates to the determining of lane geometries for inclusion in such a digital map.

In particular, as will be explained further below, an initial clustering of the obtained data is performed using a spatial indexing system. This initial clustering can then reduce the amount of processing required in particular by allowing data which relates to observations of lane boundaries that are (too) remote from the lane boundary for which the geometry is to be determined to be removed from consideration, thus saving having to further process such data. Once the initial cluster has been determined based on the spatial indexing system, the geometry of the lane boundary is determined based on the cluster.

The data to be processed thus includes data relating to observations of physical lane boundaries. Said data can be collected in any suitable and desired manner. The data can be and preferably is collected during journeys along road sections containing the lane boundaries to be observed. The data can be and preferably is collected using sensors disposed on-board vehicles travelling along the road sections. For example, in preferred embodiments, the sensor data may comprise data captured by digital cameras, LiDAR sensors, etc., depending on requirements. However, in general, the methods disclosed herein may be used for processing any suitable and desired data relating to observations of physical lane boundaries and that can be used for determining lane geometries).

The data to be processed comprises plural sets of data. Each set of data may be, and preferably is, associated with a unique identifier such that it can be distinguished from each of the other sets of data in the plural sets of data.

Each set of data of the plural sets of data includes a series of data points relating to an observed lane boundary. The series of data points can indicate the geographical location of the observed lane boundary in any suitable and desired manner. In the simplest example, a set of data includes two data points: one data point indicating the start of a line (segment) and the other data point indicating the end of the line (segment). The two data points could be, for example, in the form of a pair of coordinates indicating the geographical location of the start point and end point of the line (segment). A set of data can and preferably does include more than two data points relating to the observed lane boundary. In an embodiment, a set of data comprises a data point representing the start of a line, an extent (length) of the line and an indication of the direction in which the line extends. In another embodiment, the data points within a set of data indicate segments of a polyline (e.g. the set of data comprises one data point for each vertex of the polyline). It is possible to determine from a set of data relating to a lane boundary the position (geographical location) of the lane boundary or part thereof.

The Applicant has recognised that the data relating to the observations of the physical lane boundaries can often be "noisy" (e.g. distorted or inaccurate) and/or incomplete, e.g. owing to sensor noise and/or (intermittent) occlusion of sensors during data collection. To mitigate noisy or incomplete data collection, multiple observations of the same lane boundary can be and preferably are performed, e.g. during multiple journeys along a road section. As a result of the multiple observations, plural sets of data relating to the same lane boundary are collected.

Thus, plural sets of data representing multiple observations of lane boundaries within a road section are obtained, with different ones of the plural sets of data representing observations either of the same or of different lane boundaries within the road section.

Obtaining the plural sets of data can be done in any suitable and desired manner. For example, in some embodiments, the obtaining the plural sets of data may comprise obtaining data that has previously been recorded, and in that case the data may have been pre-conditioned or processed into a desired format for processing. In other embodiments, however, obtaining the plural sets of data comprises obtaining the "raw" (unprocessed) sensor data. In that case, on obtaining plural sets of raw sensor data, said data may be processed to a desired format suitable for further processing. Processing the data from a first format to a desired format may be referred to as pre-processing of the data. Similarly, even when the data has been previously obtained and subject to some pre-processing, further processing may be performed to condition the data into a desired format.

In a preferred embodiment, therefore, obtaining the plural sets of data comprises obtaining the plural sets of data in a first format and processing the obtained plural sets of data to a desired format. As mentioned above, the first format may be the format of the raw sensor data. Various other arrangements are however possible. Processing the obtained plural sets of data may comprise resampling the data, for instance to obtain uniform sampling.

It may further be desirable to (pre-)process the data to obtain more or fewer data points within a (and each) set of data. For example, in the event that a set of data comprises only two data points (i.e. marking the start and end points of an observation of a lane boundary), it may be desirable for additional data points to be included along that line such that the distance between successive data points is reduced. By increasing the number of data points in a set of data, it is possible to improve the accuracy of a comparison of that set of data with another set of data.

Conversely, in the event that a set of data comprises a large number of data points (according to the circumstances), it may be desirable to resample the data such that fewer data points are obtained for further processing. By reducing the number of data points within a set of data, it is possible to reduce the amount of processing required in respect of that set of data. A (and each) set of data may be resampled at regular or irregular intervals. By providing regular intervals between data points, comparisons between different sets of data may be facilitated, as will be described in more detail below. It may also be possible to more easily determine the length of an observation of a lane boundary when the set of data relating to that observation has been resampled at regular intervals.

In a preferred embodiment, obtaining plural sets of data comprises, for each set of data of the plural sets of data: determining that the series of data points within the set of data are not equally spaced along the road section; and resampling the set of data to obtain a set of data comprising a series of data points which are equally spaced along the road section.

A resampling interval may be selected in any suitable and desired manner. In a preferred embodiment, the resampling interval is selected based on the length of one or more of the observations of the lane boundaries and/or to be comparable to the expected average distance between adjacent lane boundaries. In a particularly preferred embodiment, a resampling interval is between 3 and 8 meters, for instance 5 meters. However, any other suitable resampling interval may be used, as desired.

It will be appreciated that the number of data points in the (and each) set of data after resampling may be the same as, less than or greater than the number of data points in the (and each) set of data prior to resampling.

Alternatively or additionally, it may be desirable to divide a set of data into two or more new sets of data. Thus, in a preferred embodiment, obtaining plural sets of data comprises, for each set of data of the plural sets of data: determining that the observation of the lane boundary represented by the set of data extends beyond a geographical limit; and dividing the set of data to form at least two sets of data, wherein one of the new sets of data is located entirely on one side of the geographical limit and the other one of the new sets of data is located entirely on the other side of the geographical limit.

The geographical limit may be a Universal Transverse Mercator (UTM) boundary. In an embodiment, when it is determined that a set of data represents an observation of a lane boundary which extends across a UTM boundary, the set of data is divided into a first new set of data comprising those data points which represent locations on one side of the UTM boundary and a second new set of data comprising those data points which represent locations on the other side of the UTM boundary. This may be useful, for example, when providing different sets of data to different processors of a distributed processing system, as described further below.

The data points within each set of data can be and preferably are identifiable. In other words, each data point may be associated with a unique identifier that enables it to be distinguished from other data points within the same set of data and from other data points within other sets of data. Being able to uniquely identify each data point within the plural sets of data makes it possible for different ones of the plural sets of data to be compared to one another (e.g. to determine whether or not the different ones of the plural sets of data should be grouped together).

When processing plural sets of data, it is useful to be able to determine whether respective data points from each set of data correspond to one another. Corresponding data points may be co-located within a particular subarea of the geographical area. Data points from different sets of data may be considered to correspond to one another if they are the respective closest data points to one another from each set of data.

Thus, in a preferred embodiment, a first data point of a first set of data is determined to correspond to a first data point of a second set of data based on a distance between the first data point of the first set of data and the first data point of the second set of data being shorter than a distance between the first data point of the first set of data and any other data point of the second set of data.

The Applicant has realised that by performing an initial, "coarse" grouping of sets of data that may relate to the same, first lane boundary and, subsequently, determining a cluster of sets of data that do relate to the same lane boundary, it is possible to reduce the computational effort required to determine the geometry of the lane boundary. By firstly removing from consideration those sets of data representing observations of other (remote) lane boundaries than the first lane boundary (i.e. on a line-by-line basis), it is possible to minimise the number of sets of data on which a point-by-point distance calculation is performed.

Once the plural sets of data, whether pre-processed or not, have been obtained, an initial candidate group of sets of data is identified. The initial candidate group comprises sets of data for which it is to be further determined whether the sets of data should be clustered together as relating to the same, first lane boundary. The initial candidate group is identified using a spatial indexing system in which the geographical area including the road section is subdivided into a plurality of tiles, where each tile represents a respective subarea of the geographical area.

The positions of the tiles within the spatial indexing system are spatially indexed relative to one another such that it can be determined which tiles are adjacent to each other and which tiles are remote from one another. The tiles can be spatially indexed in any suitable and desired manner. For example, each tile may be assigned a particular identifier which makes it possible to determine the location of that tile within the wider tile network.

The tiles of the spatial indexing system may be configured in any suitable and desired manner. In a preferred embodiment, the tiles cover the entirety of the geographical area, e.g. in a tessellating manner. The tiles of the spatial indexing system may be regular or irregular (that is, they may all have the same size and/or shape, or different ones of the tiles may have different sizes and/or shapes), e.g. so long as they suitably cover the entirety of the geographical area. It may be particularly useful for the tiles to all have the same size and shape. In this way, the centres of each tile are equidistant from one another, which may facilitate distance calculations.

Thus, in a preferred embodiment, the spatial indexing system comprises a set of tiles that are regular polygons. In a particularly preferred embodiment, the set of tiles are regular hexagonal tiles.

The spatial indexing system may be a hierarchical spatial indexing system. A hierarchical spatial indexing system comprises a number of different `levels' of resolution, each comprising a set (grid) of tiles, wherein the tiles associated with a (and each) level of the hierarchy are a different size (resolution) to the tiles associated with a (and each) other level of the hierarchy.

In a preferred embodiment, the hierarchical spatial indexing system comprises 'parent' and 'child' cells configured such that a (and each) parent (i.e. lower resolution) cell has a given number of child (i.e. higher resolution) cells that (substantially) fit within the area of the parent cell. The number of child cells within a parent cell can and preferably does depend on the shape of the cells within the hierarchical spatial indexing system.

The orientation of the cells of a (and each) level within the hierarchy may be the same as, or different from, the orientation of the cells within a (and each) other level of the hierarchy.

In a particularly preferred embodiment, the spatial indexing system comprises an H3 indexing system. The H3 indexing system is a hierarchical spatial indexing system comprising hexagonal tiles, wherein each parent grid of tiles is oriented differently to its respective child grid of tiles such that seven tiles of the child grid substantially fit into one tile of the parent grid. Various other arrangements would however be possible.

A resolution (e.g. a tile size) of the spatial indexing system may be set (selected) in any suitable and desired manner.

In a preferred embodiment, a tile size of the spatial indexing system is selected based on a resampling interval (that is, the distance between resampled data points in the sets of data). In a preferred embodiment, the tile size of the spatial indexing system is selected such that successive data points in a set of data are located (or at least are generally likely to be located) in the same tile or in n-level neighbouring tiles in the spatial indexing system. The value of *n* may be set to any suitable and desired integer. In a particularly preferred embodiment, n is 1, 2, 3, or 4. That is, the resampling interval and the tile size are preferably such that it can be expected that most successive data points in a set of data will be located in adjacent tiles, or in tiles which are 2, 3 or 4 tiles away (i.e. there are 1, 2 or 3 tiles between two tiles in which successive data points in a set of data are located).

Sets of data are identified as being part of the initial candidate group of sets of data based on corresponding ones of the data points for the sets of data fitting into the same tile or in n-level neighbouring tiles of the spatial indexing system. In other words, a set of data which does not comprise a corresponding data point that fits into the same tile or an n-level neighbouring tile as one or more other sets of data is excluded from the initial candidate group.

In a particularly preferred embodiment, two sets of data are determined to form part of an initial candidate group if at least two corresponding data points from the two sets of data fit into a respective same tile or *n*-level neighbouring tile of the spatial indexing system. That is, a first data point of the first set of data and a corresponding first data point of the second set of data fit into a first same tile or *n*-level neighbouring tile, and a second data point of the first set of data and a second data point of the second set of data fit into a second same tile (which may be the same as or different to the first same tile) or *n*-level neighbouring tile of the spatial indexing system.

By forming an initial candidate group based on the spatial indexing system, it is possible to remove from consideration those sets of data which relate to observations of lane boundaries that are (too) remote from the lane boundary for which the geometry is to be determined. The tiling of the spatial indexing system makes this preliminary filtering step quicker and easier since it is not necessary to compare each set of data in a point-by-point manner to determine the initial candidate group; instead, the sets of data are considered in a line-by-line manner and those lines which are determined to be remote from the line (lane boundary) to be determined can be removed from further consideration.

In a preferred embodiment, an initial candidate group comprises at least a determined number of sets of data. In other words, an initial candidate group is not identified unless a determined number of sets of data is available for inclusion in the initial candidate group. The determined number of sets of data may be any suitable and desired number of sets of data. The determined number may (and preferably does) differ according to requirements. In a preferred embodiment, an initial candidate group comprises at least five, preferably at least eight, preferably at least ten, or preferably more sets of data.

Once the initial candidate group has been identified, a cluster of sets of data that relate to the same, first lane boundary is determined by calculating respective distances between corresponding data points for different sets of data and comparing the calculated distances to a distance threshold. It will be appreciated that the determined cluster may comprise some or all of the sets of data from the initial candidate group.

The distance between corresponding data points may be calculated in any suitable and desired manner. In one embodiment, the calculated distance is a Euclidian distance. In another embodiment, the calculated distance may be a Haversine distance.

To reduce the amount of processing required to determine a cluster of sets of data that relate to the same, first lane boundary from the initial candidate group, a directed Hausdorff distance between two sets of data may be determined. That is, instead of determining the distance from a first set of data to a second set of data and then subsequently determining the distance from the second set of data to the first set of data, the distance between the two sets of data is determined only once.

To do this, the unique identifiers of the sets of data can be used to filter the data to be processed. In one embodiment, tuples are formed for each pair of sets of data for which the distance is to be calculated. Each tuple comprises a left-hand value corresponding to the unique identifier of a first set of data of the pair of sets of data and a right-hand value corresponding to the unique identifier of a second set of data of the pair of sets of data. The tuples are filtered such that any tuple in which the identifier on the left-hand side of the tuple has a greater value than the identifier on the right-hand side of the tuple is removed from consideration. In this way, it can be ensured that any respective pair of sets of data is compared only once. It will of course be appreciated that, in an alternative embodiment, the filtering can be performed based on the right-hand value of the tuple rather than the left-hand value. By filtering the data in this way prior to calculating the respective distances, duplication of processing can be minimised.

To calculate the distance between a pair of sets of data, the respective distances between corresponding data points within the sets of data are calculated and the distance between the pair of sets of data is calculated based on the distances between the respective corresponding points.

In one embodiment, a distance is calculated only between a first data point of a first set of data and a first data point of a second set of data. The calculated distance is then used as the distance between the two sets of data.

It may be desirable, however, to consider a plurality of corresponding data points within each set of data (e.g. to improve the accuracy of the calculated distance). Thus, in a preferred embodiment, determining, from the sets of data within the identified initial candidate group, a cluster of sets of data that relate to the same, first lane boundary comprises: calculating a Euclidian distance between a first data point from a first set of data of the initial candidate group and a corresponding first data point from a second set of data of the initial candidate group; calculating a Euclidian distance between a second data point from the first set of data and a corresponding second data point from the second set of data; determining that the first set of data and the second set of data should be clustered together as relating to the same, first lane boundary when the calculated distances fall below a desired comparison distance threshold.

It may be desirable to define a minimum number of data points for which a distance should be calculated. Thus, in a particularly preferred embodiment, determining, from the sets of data within the identified initial candidate group, a cluster of sets of data that relate to the same, first lane boundary comprises: determining, based on the number of data points within the first set of data and/or the second set of data, a minimum number of corresponding data points for which a Euclidian distance is to be calculated; calculating a Euclidian distance between the determined number of corresponding pairs of data points from the first set of data and the second set of data; and determining that the first set of data and the second set of data should be grouped together as relating to the same, first lane boundary when all of the calculated distances fall below a desired comparison distance threshold.

In one embodiment, the greatest of the calculated distances between corresponding points is determined to be the distance between the sets of data. In another embodiment, the smallest of the calculated distances between corresponding points is determined to be the distance between the sets of data.

Once the distance between a pair of sets of data has been calculated, the calculated distance is compared to a distance threshold in order to determine whether or not the pair of sets of data should be grouped to form a cluster. This comparison may be done in any suitable and desired manner.

In one embodiment, pairs of data for which the calculated distance meets or falls below the threshold are grouped to form a cluster, while pairs of data for which the calculated distance exceeds the threshold are not grouped to form a cluster.

In a preferred embodiment, a cluster comprises a minimum number of sets of data. In other words, a cluster is determined only if it is determined that at least the minimum number of sets of data should be grouped to form the cluster. Conversely, if it is determined that fewer than the minimum number of sets of data should be grouped to form a cluster, the cluster is not formed. The minimum number of sets of data may be any suitable and desired number. The minimum number can (and preferably is) set according to requirements. In a particularly preferred embodiment, the minimum number of sets of data is five, eight, ten, or more. By requiring a minimum number of sets of data to form a cluster, artefacts caused by noise and/or other data aberrations can be reduced or avoided.

Once a cluster of sets of data that relate to the same, first lane boundary has been determined, the determined cluster can be used to determine a geometry of the lane boundary.

The geometry of the lane boundary can be determined in any suitable and desired manner. In a preferred embodiment, determining a geometry of the lane boundary comprises generating a bounding box that encompasses the data points for all sets of data within the determined cluster; and determining the geometry of the lane boundary using the generated bounding box. In a particularly preferred embodiment, determining the geometry of the lane boundary using the generated bounding box comprises: determining a centreline of the bounding box; and using the determined centreline to determine the geometry of the lane boundary.

In an embodiment, a method as described herein also comprises updating a digital map to include the determined geometry of the first lane boundary.

A second aspect of the present disclosure particularly relates to the determining of positions of lane centrelines for inclusion in a digital map. Techniques described above in connection with determining a geometry of a lane boundary may be applied in a similar manner to determining the position of a lane centreline. In particular, the Applicant has realised that the described clustering techniques are useful for reducing the amount of processing required to determine the position of a lane centreline.

Thus, in a second aspect, a method is provided of determining a position of a lane centreline within a road section within a geographical area represented by a digital map, wherein the road section is divided into a set of one or more lanes each bounded by two lane boundaries, wherein each lane centreline indicates the midpoint between the two lane boundaries of a respective one of the one or more lanes, the method comprising:
obtaining plural sets of data representing a plurality of separate vehicle trajectories of vehicles travelling along respective portions of the road section, wherein different ones of the plural sets of data may represent different vehicle trajectories along the same or different lanes of the respective portions of the road section, wherein each set of data includes a respective series of data points spaced along the portion of the road section and representing the trajectory of a vehicle travelling along a particular lane of the portion of the road section;
identifying from the obtained plural sets of data an initial candidate group of sets of data for which it is to be further determined whether the sets of data should be clustered together as relating to the same, first lane centreline;
wherein the identifying of the initial candidate group of sets of data is performed using a spatial indexing system in which the geographical area including the road section is subdivided into a plurality of tiles, each representing a respective subarea of the geographical area, and wherein the positions of the tiles are spatially indexed relative to each other such that it can be determined which tiles are adjacent to each other,
wherein sets of data are identified as being part of the initial candidate group of sets of data based on corresponding ones of the data points for the sets of data fitting into the same tile or in n-level neighbouring tiles of the spatial indexing system;
determining, from the sets of data within the identified initial candidate group of sets of data, a first cluster of sets of data that relate to the same, first lane centreline by calculating respective distances between corresponding data points for different sets of data and comparing the calculated distances to a distance threshold; and
determining, using the first cluster of sets of data that have been determined to relate to the same, first lane centreline, the position of the lane centreline.

The data to be processed thus includes data relating to vehicle trajectories of vehicles travelling along separate portions of the road section. Said data can be collected in any suitable and desired manner. The data can be and preferably is collected during journeys along road sections containing the lane centrelines for which the positions are to be determined. The data can be and preferably is positional data, such as GNSS data, particularly preferably GPS data. However, in general, the methods disclosed herein may be used for processing any suitable and desired data relating to vehicle trajectories and that can be used for determining positions of lane centrelines.

The data to be processed comprises plural sets of data. Each set of data may be, and preferably is, associated with a unique identifier such that it can be distinguished from each of the other sets of data in the plural sets of data.

Each set of data of the plural sets of data includes a series of data points relating to the trajectory of a vehicle along a portion of a road section. The series of data points can indicate the vehicle trajectory in any suitable and desired manner. In the simplest example, a set of data includes two data points: one data point indicating the start of a line (segment) representing the vehicle trajectory and one data point indicating the end of the line (segment) representing the vehicle trajectory. The two data points could be, for example, in the form of a pair of coordinates indicating the geographical location of the start point and end point of the line (segment). A set of data can and preferably does include more than two data points relating to the vehicle trajectory.

In an embodiment, a set of data comprises a data point representing the start of a line, an extent (length) of the line and an indication of the direction in which the line extends. In another embodiment, the data points within a set of data indicate segments of a polyline

(e.g. the set of data comprises one data point for each vertex of the polyline). It is possible to determine from a set of data relating to a vehicle trajectory the position (geographical location) of the lane centreline or part thereof.

Multiple trajectories of vehicles travelling along the same portion of a road section can be and preferably are determined, e.g. during multiple journeys along a (portion of a) road section. As a result of the multiple determinations of trajectories, plural sets of data relating to a same lane are collected.

Thus, plural sets of data representing multiple vehicle trajectories within a (portion of a) road section are obtained. Obtaining the plural sets of data can be done in any suitable and desired manner. For example, in some embodiments, the obtaining the plural sets of data may comprise obtaining data that has previously been recorded, and in that case the data may have been pre-conditioned or processed into a desired format for processing. In other embodiments, however, obtaining the plural sets of data comprises obtaining the "raw" (unprocessed) data. In that case, on obtaining plural sets of raw sensor data, said data may be processed to a desired format suitable for further processing. Processing the data from a first format to a desired format may be referred to as pre-processing of the data. Similarly, even when the data has been previously obtained and subject to some pre-processing, further processing may be performed to condition the data into a desired format.

In a preferred embodiment, therefore, obtaining the plural sets of data comprises obtaining the plural sets of data in a first format and processing the obtained plural sets of data to a desired format. As mentioned above, the first format may be the format of the raw data. Various other arrangements are however possible. Processing the obtained plural sets of data may comprise resampling the data, for instance to obtain uniform sampling.

It may further be desirable to (pre-)process the data to obtain more or fewer data points within a (and each) set of data. For example, in the event that a set of data comprises only two data points (i.e. marking the start and end points of a vehicle trajectory), it may be desirable for additional data points to be included along that line such that the distance between successive data points is reduced. By increasing the number of data points in a set of data, it is possible to improve the accuracy of a comparison of that set of data with another set of data.

Conversely, in the event that a set of data comprises a large number of data points (according to the circumstances), it may be desirable to resample the data such that fewer data points are obtained for further processing. By reducing the number of data points within a set of data, it is possible to reduce the amount of processing required in respect of that set of data. A (and each) set of data may be resampled at regular or irregular intervals. By providing regular intervals between data points, comparisons between different sets of data may be facilitated, as will be described in more detail below.

In a preferred embodiment, obtaining plural sets of data comprises, for each set of data of the plural sets of data: determining that the series of data points within the set of data are not equally spaced along the road section; and resampling the set of data to obtain a set of data comprising a series of data points which are equally spaced along the road section. A resampling interval may be selected in any suitable and desired manner. A resampling interval may be selected to be comparable to the expected average distance between lane centrelines or adjacent lanes. In a particularly preferred embodiment, a resampling interval is between 3 and 8 meters, for instance 5 meters. However, any other suitable resampling interval may be used, as desired.

It will be appreciated that the number of data points in the (and each) set of data after resampling may be the same as, less than or greater than the number of data points in the (and each) set of data prior to resampling.

The data points within each set of data can be and preferably are identifiable. In other words, each data point may be associated with a unique identifier that enables it to be distinguished from other data points within the same set of data and from other data points within other sets of data. Being able to uniquely identify each data point within the plural sets of data makes it possible for different ones of the plural sets of data to be compared to one another (e.g. to determine whether or not the different ones of the plural sets of data should be grouped together).

When processing plural sets of data, it is useful to be able to determine whether respective data points from each set of data correspond to one another. Corresponding data points may be co-located within a particular subarea of the geographical area. Data points from different sets of data may be considered to correspond to one another if they are the respective closest data points to one another from each set of data.

Thus, in a preferred embodiment, a first data point of a first set of data is determined to correspond to a first data point of a second set of data based on a distance between the first data point of the first set of data and the first data point of the second set of data being shorter than a distance between the first data point of the first set of data and any other data point of the second set of data.

The Applicant has realised that by processing in parallel data relating to different subareas of the geographical area represented by the digital map, it is possible to speed up the determination of the position(s) of one or more lane centrelines within the geographical area.

To do this, sets of data are grouped based on a spatial indexing system in which the geographical area including the road section is subdivided into a plurality of tiles, where each tile represents a respective subarea of the geographical area comprising a given portion of the road section. Thus, in an embodiment, all of the sets of data which are located within a given tile (i.e. a given portion of the road section) are processed together. Where a set of data corresponding to a vehicle trajectory extends across a plurality of tiles of the spatial indexing system, the original set of data is subdivided into a corresponding plurality of sets of data such that each of the plurality of sets of data is contained within a single tile of the spatial indexing system.

The positions of the tiles within the spatial indexing system are spatially indexed relative to one another such that it can be determined which tiles are adjacent to each other and which tiles are remote from one another. The tiles can be spatially indexed in any suitable and desired manner. For example, each tile may be assigned a particular identifier which makes it possible to determine the location of that tile within the wider tile network.

The tiles of the spatial indexing system may be configured in any suitable and desired manner. In a preferred embodiment, the tiles cover the entirety of the geographical area, e.g. in a tessellating manner. The tiles of the spatial indexing system may be regular or irregular (that is, they may all have the same size and/or shape, or different ones of the tiles may have different sizes and/or shapes), e.g. so long as they suitably cover the entirety of the geographical area. It may be particularly useful for the tiles to all have the same size and shape. In this way, the centres of each tile are equidistant from one another, which may facilitate distance calculations.

Thus, in a preferred embodiment, the spatial indexing system comprises a set of tiles that are regular polygons. In a particularly preferred embodiment, the set of tiles are regular hexagonal tiles.

The spatial indexing system may be a hierarchical spatial indexing system. A hierarchical spatial indexing system comprises a number of different `levels' of resolution, each comprising a set (grid) of tiles, wherein the tiles associated with a (and each) level of the hierarchy are a different size (resolution) to the tiles associated with a (and each) other level of the hierarchy.

In a preferred embodiment, the hierarchical spatial indexing system comprises 'parent' and 'child' cells configured such that a (and each) parent (i.e. lower resolution) cell has a given number of child (i.e. higher resolution) cells that (substantially) fit within the area of the parent cell. The number of child cells within a parent cell can and preferably does depend on the shape of the cells within the hierarchical spatial indexing system.

The orientation of the cells of a (and each) level within the hierarchy may be the same as, or different from, the orientation of the cells within a (and each) other level of the hierarchy.

In a particularly preferred embodiment, the spatial indexing system comprises an H3 indexing system. The H3 indexing system is a hierarchical spatial indexing system comprising hexagonal tiles, wherein each parent grid of tiles is oriented differently to its respective child grid of tiles such that seven tiles of the child grid substantially fit into one tile of the parent grid. Various other arrangements would however be possible.

A resolution (e.g. a tile size) of the spatial indexing system may be set (selected) in any suitable and desired manner.

In a preferred embodiment, the spatial indexing system is a hierarchical spatial indexing system comprising a first level having a first tile size and a second level having a second, smaller, tile size, wherein each portion of the road section corresponds to an area covered by a respective tile of the first level of the spatial indexing system, wherein obtaining plural sets of data comprises determining, for each set of data, one or more sets of data points, wherein each set of data points includes data points which fit within a respective tile of the first level, and wherein the tiles used to identify the initial candidate group of sets of data are tiles of the second level.

Preferably, a tile size of the tiles of the first level of the spatial indexing system is selected based on a dimension of the road. For example, the tile size of the tiles of the first level of the spatial indexing system may be selected such that a total width of the road segment (i.e. from the left-most lane boundary to the right-most lane boundary of the road segment) fits within a single tile. That is to say, if a total width of the road segment from the left-most lane boundary of the left-most lane to the right-most lane boundary of the right-most lane is 40 metres, a tile size of the tiles of the first level of the spatial indexing system is selected such that a side of each tile is at least 40 metres in length.

The spatial indexing system may comprise a set of tiles that are regular polygons, such as a set of tiles that are regular hexagonal tiles. Preferably, the spatial indexing system comprises an H3 indexing system.

Where the spatial indexing system comprises an H3 indexing system, the first level may be an H11 level and the second level may be an H14 level. It will of course be appreciated that other levels of an H3 indexing system may be used, depending on requirements.

Once the plural sets of data, whether pre-processed or not, have been obtained, an initial candidate group of sets of data is identified, as has been described above in connection with the determination of geometries of lane boundaries.

In a preferred embodiment, a tile size of the second level of the spatial indexing system is selected based on a resampling interval (that is, the distance between resampled data points in the sets of data). In a preferred embodiment, the tile size of the second level of the spatial indexing system is selected such that successive data points in a set of data are located (or at least are generally likely to be located) in the same tile or in n-level neighbouring tiles in the spatial indexing system. The value of *n* may be set to any suitable and desired integer. In a particularly preferred embodiment, n is 1, 2, 3, or 4. That is, the resampling interval and the tile size are preferably such that it can be expected that most successive data points in a set of data will be located in adjacent tiles, or in tiles which are 2, 3 or 4 tiles away (i.e. there are 1, 2 or 3 tiles between two tiles in which successive data points in a set of data are located).

Sets of data are identified as being part of the initial candidate group of sets of data based on corresponding ones of the data points for the sets of data fitting into the same tile or in n-level neighbouring tiles of the spatial indexing system. In other words, a set of data which does not comprise a corresponding data point that fits into the same tile or an n-level neighbouring tile as one or more other sets of data is excluded from the initial candidate group.

In a particularly preferred embodiment, two sets of data are determined to form part of an initial candidate group if at least two corresponding data points from the two sets of data fit into a respective same tile or *n*-level neighbouring tile of the spatial indexing system. That is, a first data point of the first set of data and a corresponding first data point of the second set of data fit into a first same tile or n-level neighbouring tile, and a second data point of the first set of data and a second data point of the second set of data fit into a second same tile (which may be the same as or different to the first same tile) or *n*-level neighbouring tile of the spatial indexing system.

By forming an initial candidate group based on the spatial indexing system, it is possible to remove from consideration those sets of data which relate to vehicle trajectories in lanes that are not the lane for which the centreline is to be determined. The tiling of the spatial indexing system makes this preliminary filtering step quicker and easier since it is not necessary to compare each set of data in a point-by-point manner to determine the initial candidate group; instead, the sets of data are considered in a line-by-line manner and those lines which are determined to be remote from the line (lane centreline) to be determined can be removed from further consideration.

In a preferred embodiment, an initial candidate group comprises at least a determined number of sets of data. In other words, an initial candidate group is not identified unless a determined number of sets of data is available for inclusion in the initial candidate group. The determined number of sets of data may be any suitable and desired number of sets of data. The determined number may (and preferably does) differ according to requirements. In a preferred embodiment, an initial candidate group comprises at least five, preferably at least eight, preferably at least ten, or preferably more sets of data.

Once the initial candidate group has been identified, a cluster of sets of data that relate to the same, first lane centreline is determined by calculating respective distances between corresponding data points for different sets of data and comparing the calculated distances to a distance threshold. It will be appreciated that the determined cluster may comprise some or all of the sets of data from the initial candidate group.

The distance between corresponding data points may be calculated in any suitable and desired manner. In one embodiment, the calculated distance is a Euclidian distance. In another embodiment, the calculated distance may be a Haversine distance.

To reduce the amount of processing required to determine a cluster of sets of data that relate to the same, first lane centreline from the initial candidate group, a directed Hausdorff distance between two sets of data may be determined. That is, instead of determining the distance from a first set of data to a second set of data and then subsequently determining the distance from the second set of data to the first set of data, the distance between the two sets of data is determined only once.

To do this, the unique identifiers of the sets of data can be used to filter the data to be processed. In one embodiment, tuples are formed for each pair of sets of data for which the distance is to be calculated. Each tuple comprises a left-hand value corresponding to the unique identifier of a first set of data of the pair of sets of data and a right-hand value corresponding to the unique identifier of a second set of data of the pair of sets of data. The tuples are filtered such that any tuple in which the identifier on the left-hand side of the tuple has a greater value than the identifier on the right-hand side of the tuple is removed from consideration. In this way, it can be ensured that any respective pair of sets of data is compared only once. It will of course be appreciated that, in an alternative embodiment, the filtering can be performed based on the right-hand value of the tuple rather than the left-hand value. By filtering the data in this way prior to calculating the respective distances, duplication of processing can be minimised.

To calculate the distance between a pair of sets of data, the respective distances between corresponding data points within the sets of data are calculated and the distance between the pair of sets of data is calculated based on the distances between the respective corresponding points.

In one embodiment, a distance is calculated only between a first data point of a first set of data and a first data point of a second set of data. The calculated distance is then used as the distance between the two sets of data.

It may be desirable, however, to consider a plurality of corresponding data points within each set of data (e.g. to improve the accuracy of the calculated distance). Thus, in a preferred embodiment, determining, from the sets of data within the identified initial candidate group, a cluster of sets of data that relate to the same, first lane centreline comprises: calculating a Euclidian distance between a first data point from a first set of data of the initial candidate group and a corresponding first data point from a second set of data of the initial candidate group; calculating a Euclidian distance between a second data point from the first set of data and a corresponding second data point from the second set of data; determining that the first set of data and the second set of data should be clustered together as relating to the same, first lane centreline when the calculated distances fall below a desired comparison distance threshold.

It may be desirable to define a minimum number of data points for which a distance should be calculated. Thus, in a particularly preferred embodiment, determining, from the sets of data within the identified initial candidate group, a cluster of sets of data that relate to the same, first lane centreline comprises: determining, based on the number of data points within the first set of data and/or the second set of data, a minimum number of corresponding data points for which a Euclidian distance is to be calculated; calculating a Euclidian distance between the determined number of corresponding pairs of data points from the first set of data and the second set of data; and determining that the first set of data and the second set of data should be grouped together as relating to the same, first lane centreline when all of the calculated distances fall below a desired comparison distance threshold.

In one embodiment, the greatest of the calculated distances between corresponding points is determined to be the distance between the sets of data. In another embodiment, the smallest of the calculated distances between corresponding points is determined to be the distance between the sets of data.

Once the distance between a pair of sets of data has been calculated, the calculated distance is compared to a distance threshold in order to determine whether or not the pair of sets of data should be grouped to form a cluster. This comparison may be done in any suitable and desired manner.

In one embodiment, pairs of data for which the calculated distance meets or falls below the threshold are grouped to form a cluster, while pairs of data for which the calculated distance exceeds the threshold are not grouped to form a cluster.

In a preferred embodiment, a cluster comprises a minimum number of sets of data. In other words, a cluster is determined only if it is determined that at least the minimum number of sets of data should be grouped to form the cluster. Conversely, if it is determined that fewer than the minimum number of sets of data should be grouped to form a cluster, the cluster is not formed. The minimum number of sets of data may be any suitable and desired number. The minimum number can (and preferably is) set according to requirements. In a particularly preferred embodiment, the minimum number of sets of data is five, eight, ten, or more. By requiring a minimum number of sets of data to form a cluster, artefacts caused by noise and/or other data aberrations can be reduced or avoided.

Once a cluster of sets of data that relate to the same, first lane centreline has been determined, the determined cluster can be used to determine a position of the lane centreline.

The position of the lane centreline can be determined in any suitable and desired manner. In a preferred embodiment, determining a position of the lane centreline comprises generating a bounding box that encompasses the data points for all sets of data within the determined cluster; and determining the position of the lane centreline using the generated bounding box. In a particularly preferred embodiment, determining the position of the lane centreline using the generated bounding box comprises: determining a centreline of the bounding box; and using the determined centreline of the bounding box to determine the position of the lane centreline.

In an embodiment, the method further comprises identifying that the road section comprises a road junction located in a subarea of the geographical area represented by the digital map, the road junction allowing one of a plurality of different routes to be taken by a vehicle passing through the road junction, wherein at least a portion of each of the two of the plurality of different routes overlaps; and performing processing to deduplicate the overlapping portions of the different routes.

In an embodiment, deduplication of the overlapping portions comprises determining that a first portion of a first route and a first portion of a second route overlap and combining the first portion of the first route and the first portion of the second route to form a combined portion which forms part of both the first route and the second route.

In an embodiment, a method as described herein also comprises updating a digital map to include the determined position of the first lane centreline.

The present disclosure also extends to apparatus configured to execute one or more of the methods disclosed herein. Thus, an apparatus may be provided comprising one or more processors configured to perform any of the methods as disclosed herein. In a particularly preferred embodiment, methods disclosed herein are performed in a distributed processing system comprising plural data processors configured to execute data processing operations. In the particularly preferred embodiment, data processing operations are allocated to respective ones of the plural data processors such that processing relating to an initial candidate group is performed by the same data processor.

The present disclosure also extends to software configured to cause a processor to execute one or more of the methods disclosed herein. Thus, a computer program product may be provided including a set of instructions that, when executed by one or more processors, will perform one of the methods as disclosed herein.

That is, the methods in accordance with the present disclosure may be, and preferably are, implemented at least partially using software e.g. computer programs.

It will thus be seen that when viewed from further aspects the disclosure may include any combination of computer software specifically adapted to carry out the methods herein described when installed on data processing means, a computer program element comprising computer software code portions for performing the methods herein described when the program element is run on data processing means, and a computer program comprising code means adapted to perform all the steps of a method or of the methods herein described when the program is run on a data processing system.

The presently described method may accordingly suitably be embodied as a computer program product for use with a computer system. Such an implementation may comprise a series of computer readable instructions either fixed on a tangible, non-transitory medium, such as a computer readable medium, for example, diskette, CD-ROM, ROM, RAM, flash memory, or hard disk. It could also comprise a series of computer readable instructions transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example, shrink-wrapped software, pre-loaded with a computer system, for example, on a system ROM or fixed disk, or distributed from a server or electronic bulletin board over a network, for example, the Internet or World Wide Web.

A number of embodiments will now be described by way of example only and with reference to the accompanying drawings, in which:
Figure 1 shows a flowchart illustrating a method of determining a geometry of a lane boundary in an embodiment;
Figures 2A to 2F schematically show the steps for determining a geometry of a lane boundary according to an embodiment;
Figure 3 schematically shows a data processing step according to an embodiment;
Figures 4A to 4C schematically show steps of a method of determining a lane centreline in an embodiment; and
Figure 5 shows a flowchart illustrating a method of determining a lane centreline in an embodiment.

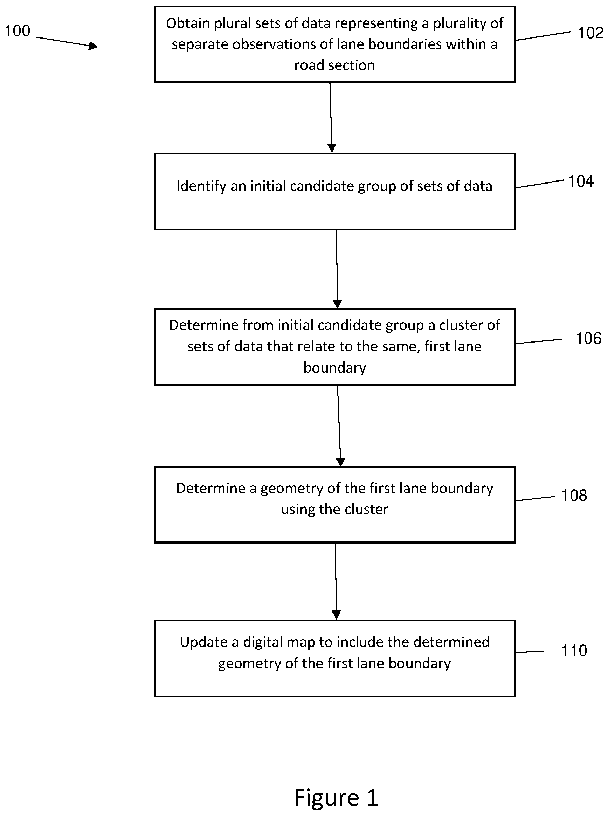

Figure 1 shows a method 100 of determining geometries of lane boundaries in accordance with the disclosure. The method 100 comprises obtaining (step 102) plural sets of data representing a plurality of separate observations of lane boundaries within a road section within a geographical area represented by a digital map. Different ones of the plural sets of data may represent either observations of the same or of different lane boundaries within the road section.

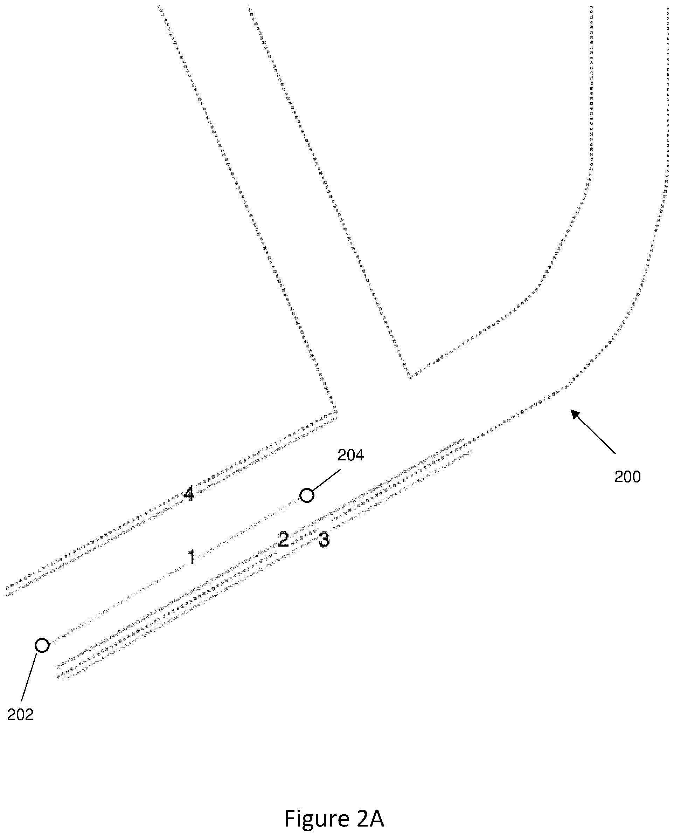

Figure 2A schematically shows plural sets of data 1, 2, 3, 4 representing a plurality of separate observations of lane boundaries within a road section 200 indicated by the dotted lines. The plural sets of data 1, 2, 3, 4 correspond to observations of lane boundaries that are spaced out within the indicated road section. Each set of data of the plural sets of data 1, 2, 3, 4 includes a respective series of data points spaced along the road section and representing the position of the lane boundary. By way of illustration only, one set of data 1 comprises two data points 202, 204 which indicate the respective start and end points of the observation associated with the one set of data 1. It will be appreciated that a (and each) set of data may comprise more than two data points.

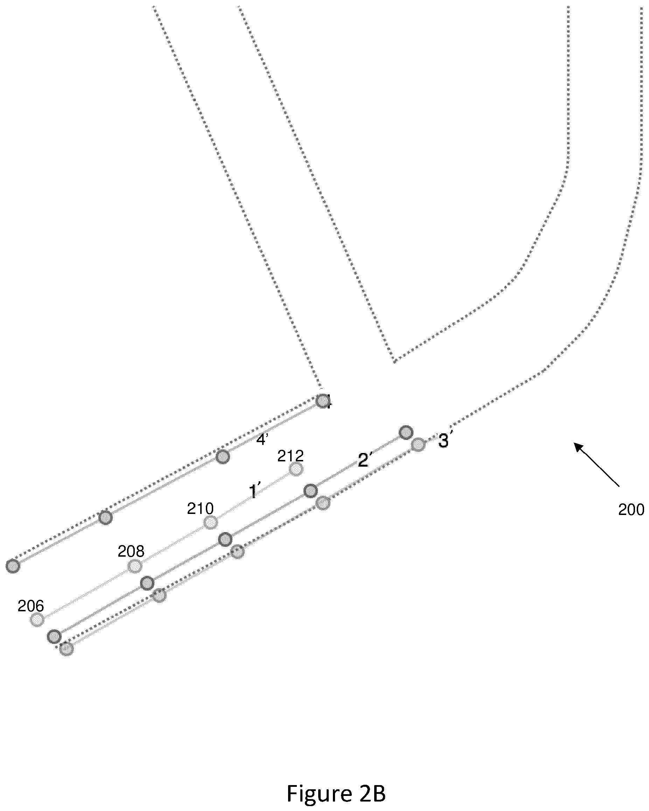

Each set of data of the plural sets of data 1, 2, 3, 4 is resampled at regular intervals to obtain sets of data 1', 2', 3'; 4', as illustrated in figure 2B. The individual sets of data are referred to below as the first 1', second 2', third 3' and fourth 4' sets of data. Each data point within the plural sets of data 1', 2', 3', 4' is associated with a unique identifier that allows the respective data point to be distinguished from the other data points within the same set of data and from the other data points within other sets of data.

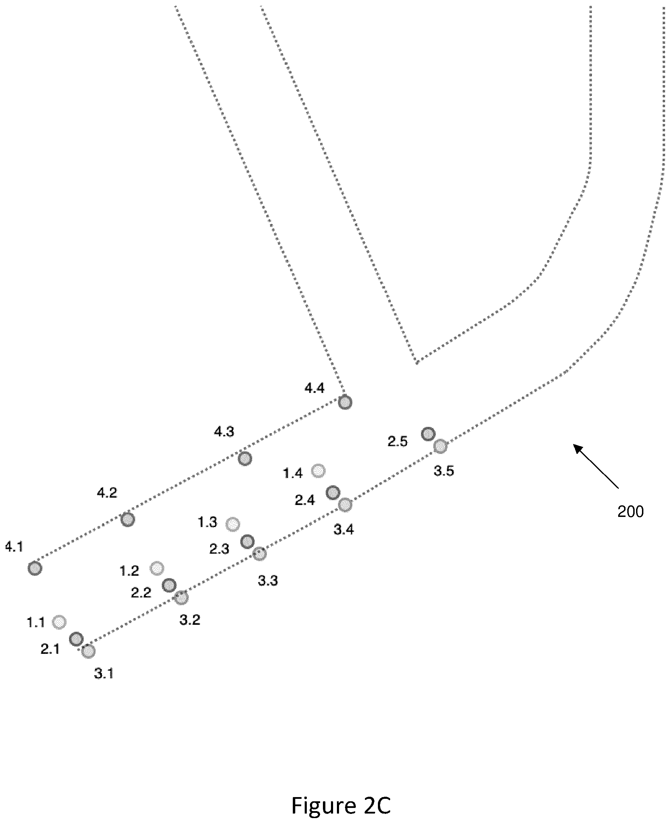

As shown in figure 2C, in this example, the data points of set of data 1' are allocated the unique identifiers 1.1, 1.2, 1.3 and 1.4. Similarly, the data points of set of data 2' are allocated the unique identifiers 2.1, 2.2, 2.3, 2.4 and 2.5; the data points of set of data 3' are allocated the unique identifiers 3.1, 3.2, 3.3, 3.4 and 3.5; and the data points of set of data 4' are allocated the unique identifiers 4.1, 4.2, 4.3 and 4.4.

Corresponding ones of the data points from each set of data are determined based on a distance between the data points. In particular, a first data point of a first set of data is determined to correspond to a first data point of a second set of data based on a distance between the first data point of the first set of data and the first data point of the second set of data being shorter than a distance between the first data point of the first set of data and any other data point of the second set of data. In other words, data point 1.1 of the first set of data 1' is determined to correspond to data point 2.1 of the second set of data 2', to data point 3.1 of the third set of data 3' and to data point 4.1 of the fourth set of data 4'.

Referring back to the flow chart shown in figure 1, an initial candidate group of sets of data for which it is to be further determined whether the sets of data should be clustered together as relating to the same, first lane boundary is identified (step 104) from the plural sets of data 1', 2', 3', 4'.

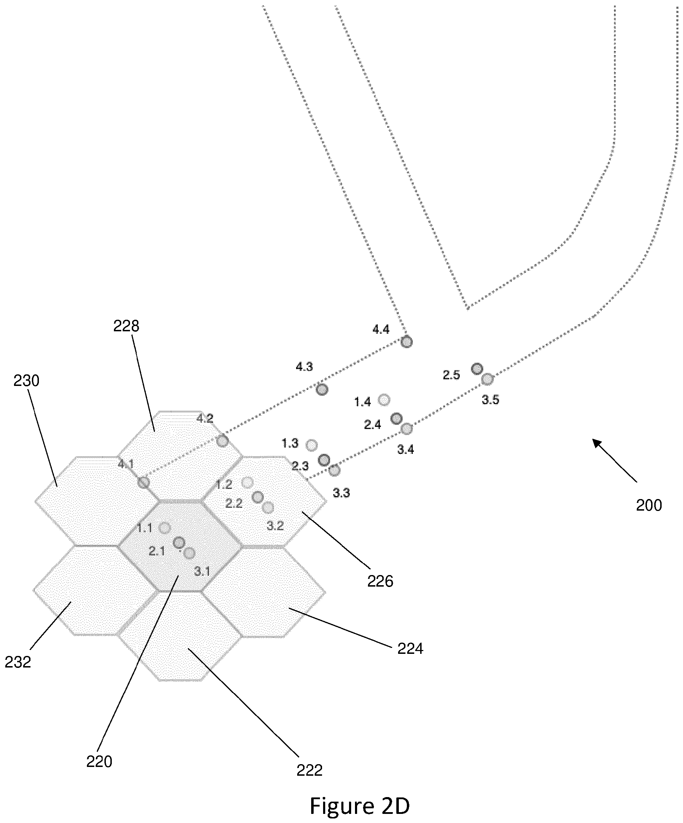

Identifying the initial candidate group comprises using a spatial indexing system in which the geographical area including the road section is subdivided into a plurality of tiles. This is illustrated in figure 2D. Although figure 2D shows only seven tiles of the spatial indexing system to increase legibility, it will be appreciated that the spatial indexing system comprises more tiles and extends over the entire area of the road section 200. The tiles 220, 222, 224, 226, 228, 230, 232 illustrated in figure 2D may be tiles of an H3 indexing system.

The tiles of the spatial indexing system are spatially indexed relative to one another such that it is possible to determine which tiles are adjacent to each other. As illustrated in figure 2D, a central tile 220 is in the shape of a regular hexagon and is surrounded by six further tiles 222, 224, 226, 228, 230 and 232. Owing to the spatial indexing of the tiles, it is possible to determine that tile 220 is adjacent to each of the other six tiles 222, 224, 226, 228, 230, 232 (surrounded by the other six tiles 222, 224, 226, 228, 230, 232).

The resolution of the spatial indexing system (that is, a tile size of the spatial indexing system) is selected based on the resampling interval such that successive data points within a set of data are located (or at least are likely to be located) in the same tile (e.g. tile 228 which contains data points 4.1 and 4.2) or adjacent tiles (e.g. tiles 220 and 226 which respectively contain data points 1.1 and 1.2, 2.1 and 2.2, and 3.1 and 3.2).

From the tiles 220 and 226, it is possible to identify an initial candidate group of sets of data 1', 2' and 3' for which it is to be further determined whether the sets of data should be clustered together as relating to the same, first lane boundary. This is because each of the corresponding data points 1.1, 2.1 and 3.1 are all contained within the same tile 220, and because each of the corresponding data points 1.2, 2.2 and 3.2 are all contained within the same tile 226. The fourth set of data 4' is not included in the initial candidate group of sets of data since it does not meet the condition that a corresponding point is located in the same tile as the corresponding points of the other sets of data.

It will be appreciated that, in another embodiment, the condition for determining the initial candidate group of sets of data may be set such that corresponding data points should be in adjacent tiles of the spatial indexing system (or within 2, 3, or 4 tiles). In that case, the fourth set of data 4' as depicted in figure 2D would also be included in the initial candidate group. In such a case, it could also be considered to go to select a higher resolution (i.e. a smaller tile size). While this may increase accuracy, it is also likely to increase the computational load and may incur the risk of increasing false negatives.

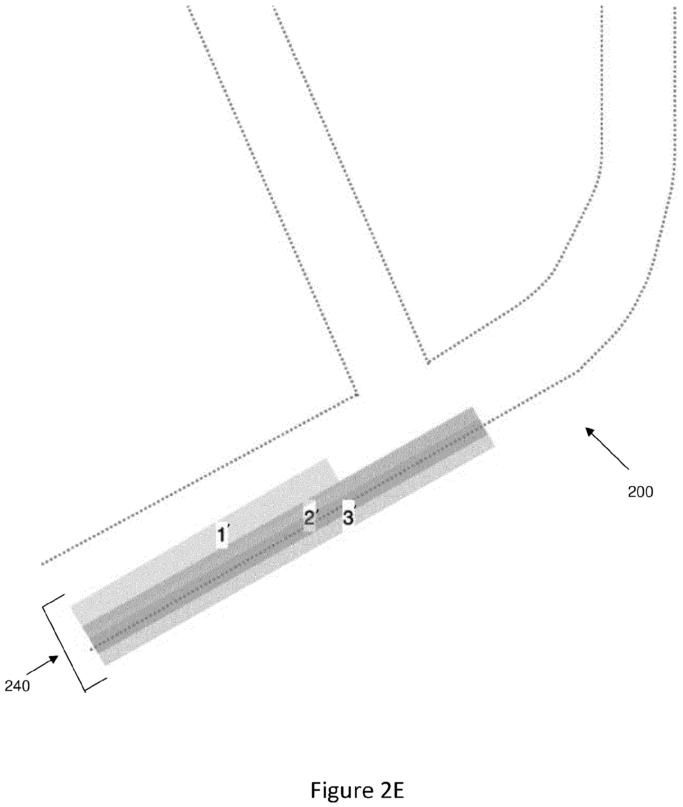

In step 106 of the method illustrated in figure 1, a cluster of sets of data that relate to the same, first lane boundary is determined from the initial candidate group by calculating respective distances between corresponding data points for different sets of data and comparing the calculated distances to a distance threshold. The determined cluster 240 is shown in figure 2E. In particular, it has been determined that based on the calculated distances between the sets of data in the initial candidate group that all of the sets of data 1', 2', 3' in the initial candidate group should be clustered together as relating to the same, first lane boundary.

It will of course be appreciated that in other embodiments, not all of the sets of data in the identified initial candidate group will form part of the determined cluster of sets of data that relate to the same, first lane boundary.

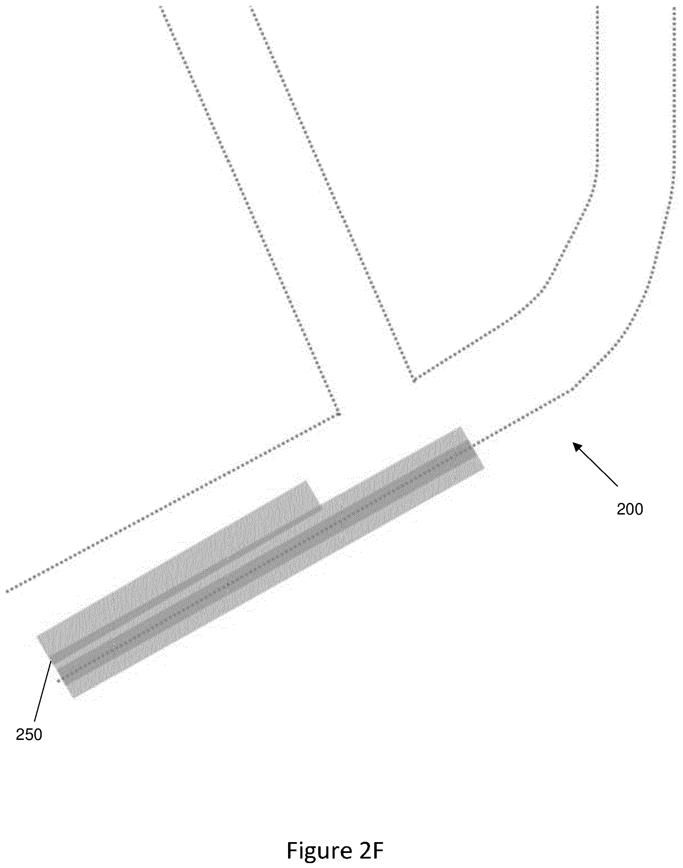

In step 108 of the method shown in figure 1, a geometry of the first lane boundary is determined using the cluster. As illustrated in figure 2F, the geometry of the lane boundary is determined by generating a bounding box 250 that encompasses the data points for all sets of data within the identified cluster.

In step 110 of the method shown in figure 1, a digital map is updated to include the determined geometry of the first lane boundary.

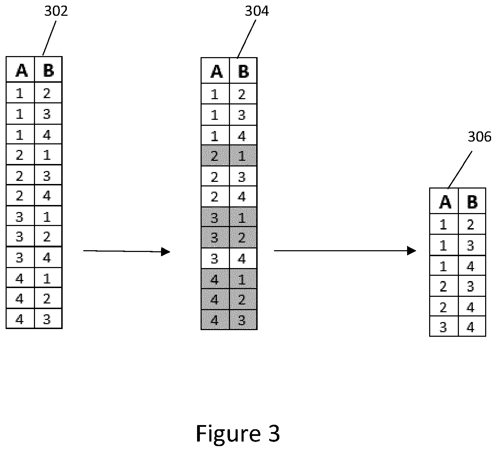

Figure 3 schematically shows a data processing step according to an embodiment. In order to reduce the amount of data processing required to calculate the distances between sets of data, the unique identifiers of the sets of data are used to filter the data to be processed.

In one embodiment, tuples in the format [A, B] are formed for each pair of sets of data for which the distance is to be calculated. Each tuple comprises a first, left-hand value A corresponding to the unique identifier of a first set of data of the pair of sets of data and a second, right-hand value B corresponding to the unique identifier of a second set of data of the pair of sets of data.

As illustrated in table 302 of figure 3, each combination of two unique identifiers is represented twice. In other words, the first set of data 1 and the second set of data 2 are combined in a first tuple [1, 2] and in a second tuple [2, 1]. This is repeated for all combinations of pairs of sets of data.

Tuples for which the left-hand value A is greater than the right-hand value B are identified using shading in table 304 of figure 3. The identified are filtered out such that any tuple in which the left-hand value is greater than the right-hand value is removed from consideration. The resulting table 306 shows the reduced set of tuples for which the distance is to be calculated.

In this way, it can be ensured that any respective pair of sets of data is compared only once. It will of course be appreciated that, in an alternative embodiment, the filtering can be performed in a similar manner but based on the right-hand value of the tuple being greater than the left-hand value instead of vice versa as is described above.

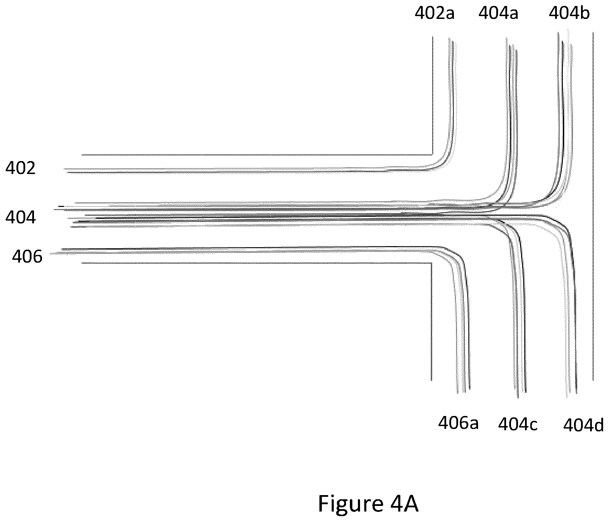

Figures 4A to 4C schematically show process steps for determining lane centrelines based on vehicle trajectories. Figure 4A shows a segment of a road network comprising three lanes at a junction point within the road network at which vehicles may turn either left or right, depending on which lane they are travelling along. A plurality of vehicle trajectories of vehicles travelling along the lanes are also illustrated. Two of the lanes allow only one possible path of travel: a vehicle in a left-hand lane may only travel from a point 402 to a point 402a (turning left at the junction), while a vehicle in a right-most lane may only travel from a point 406 to a point 406a (turning right at the junction).

Vehicles travelling in the middle lane (i.e. from a point 404) may turn either left or right according to one of four possible paths. A vehicle starting in the middle lane and intending to turn left may travel from a point 404 to a point 404a, ending up in a middle lane after the junction, or may travel from the point 404 to a point 404b, ending up in a right-most lane after the junction. Similarly, a vehicle starting in the middle lane and intending to turn right may travel from the point 404 to a point 404c, ending up in a middle lane after the junction, or may travel from the point 404 to a point 404d, ending up in a left-most lane after the junction.

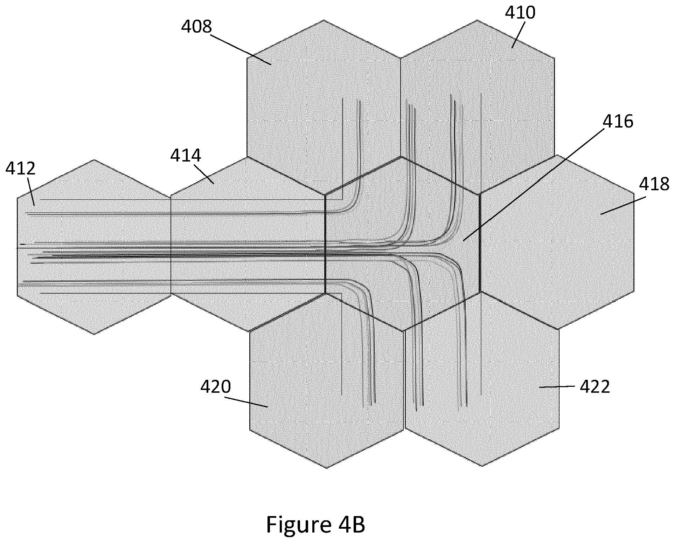

Figure 4B shows part of a spatial indexing system overlaid on the road segment from figure 4A. The spatial indexing system comprises a number of hexagonal tiles (408 - 422) that fit together without overlapping such that the road segment is divided into subareas corresponding to the tiles.

Sets of data are grouped based on the spatial indexing system such that all of the sets of data which are located within a given tile 408 - 422 are processed together. Where a set of data corresponding to a vehicle trajectory extends across a plurality of tiles of the spatial indexing system, the original set of data is subdivided into a corresponding plurality of sets of data such that each of the plurality of sets of data is contained within a single tile of the spatial indexing system.

By processing each tile separately, it is possible to distribute the processing to multiple processors so as to speed up the determination of the lane centrelines. That is, the more processors are able to process portions of the data in parallel, the greater the throughput of the overall system (and, hence, the faster the data can be processed).

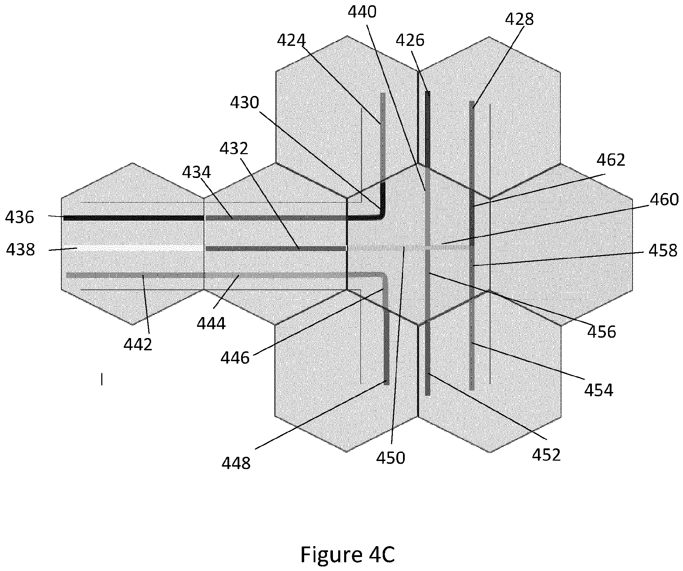

Figure 4C shows a plurality of clusters (424 - 462) that have been identified as relating to lane centrelines. The clustering method is described above in connection with figures 2A to 2F and is not repeated here for the sake of conciseness. Owing to the spatially indexed nature of the tiles of the spatial indexing system, it is possible to determine which clusters relate to the same lane(s). For example, it is possible to determine that the identified clusters 436, 434, 430 and 424 all relate to the centreline of the left-hand lane.

The central tile 416 (see figure 4B) which is located at the heart of the road junction contains a plurality of overlapping routes. Once the clusters have been determined as described above, there will be two sections of the middle lane which have overlapping clusters. These are the clusters 450 and 460 as shown in figure 4C.

To remove the duplication, the tile 416 is processed (deduplicated) after the clusters have been identified. Deduplication of the overlapping portions comprises determining that a first portion of a first route and a first portion of a second route overlap and combining the first portion of the first route and the first portion of the second route to form a combined portion which forms part of both the first route and the second route. In this way, individual clusters 450, 460 are formed in place of the overlapping clusters which were originally identified.

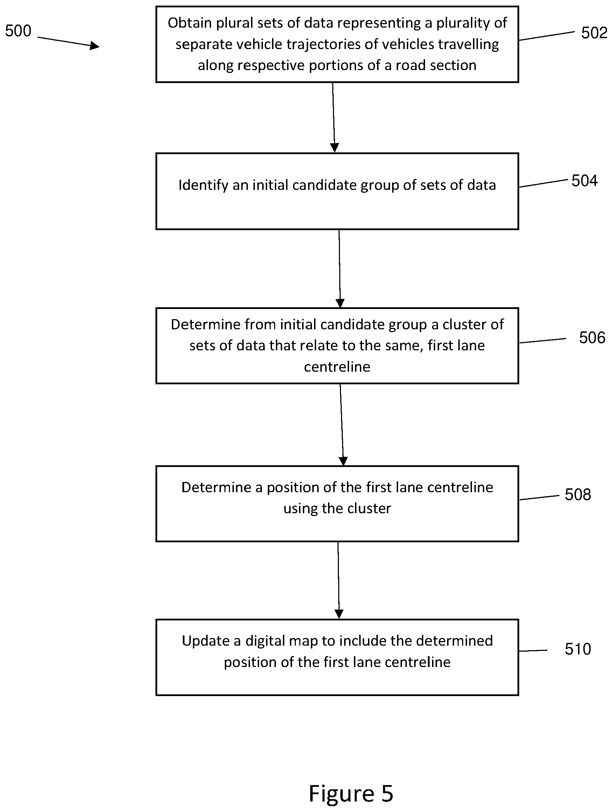

Figure 5 schematically shows a flow chart of a method 500 according to an aspect of the present disclosure. The method 500 comprises obtaining (step 502) plural sets of data representing a plurality of separate vehicle trajectories of vehicles travelling along respective portions of a road section; identifying (step 504) an initial candidate group of sets of data for which it is to be determined whether or not the sets of data relate to the same, first lane centreline, determining (step 506) from the initial candidate group of sets of data a cluster of sets of data that relate to the same, first lane centreline by calculating respective distances between corresponding data points for different sets of data and comparing the calculated distances to a distance threshold; determining (step 508) a position of the first lane centreline using the determined cluster; and updating (step 510) a digital map to include the determined position of the first lane centreline.

It will be appreciated that, while sets of data representing observations of lane boundaries that follow substantially straight lines are illustrated in the appended figures, techniques disclosed herein also apply to determining geometries of non-straight (e.g. curved) lane boundaries. Thus, in an embodiment, at least one set of data of the plural sets of data represents a curved lane boundary (e.g. having a curvature typically found in roads and/or highways).

Although embodiments described herein relate to determining geometries of lane boundaries and/or positions of lane centrelines, it will be appreciated that the techniques disclosed herein may be applied more broadly to determining geometries and/or positions of any features which may be included in digital maps and/or used in the generation and/or updating of digital maps. For example, the same principles may be applied to determine if probe traces - i.e. collections of serially ordered location data reflecting the movement of a vehicle and/or device - correspond to a same path. It will further be appreciated that some of the techniques disclosed herein could be used for other forms of data comparison, e.g. for use in map-to-map comparisons.

The foregoing detailed description has been presented for the purposes of illustration and description. It is not intended to be exhaustive or to limit the technology to the precise form disclosed. Many modifications and variations are possible in the light of the above teaching. The described embodiments were chosen in order to best explain the principles of the technology and its practical application, to thereby enable others skilled in the art to best utilise the technology in various embodiments and with various modifications as are suited to the particular use contemplated. It is intended that the scope be defined by the claims appended hereto.

## Claims

1. A method of determining geometries of lane boundaries within a road section within a geographical area represented by a digital map, wherein the lane boundaries divide the road section into a set of one or more lanes, the method comprising:
obtaining plural sets of data representing a plurality of separate observations of lane boundaries within the road section, wherein different ones of the plural sets of data may represent either observations of the same or of different lane boundaries within the road section, and wherein each set of data includes a respective series of data points spaced along the road section and representing the position of the lane boundary;
identifying from the plural sets of data representing separate observations of lane boundaries within the road section an initial candidate group of sets of data for which it is to be further determined whether the sets of data should be clustered together as relating to the same, first lane boundary,
wherein the identifying of the candidate group of sets of data is performed using a spatial indexing system in which the geographical area including the road section is subdivided into a plurality of tiles, each representing a respective subarea of the geographical area, and wherein the positions of the tiles are spatially indexed relative to each other such that it can be determined which tiles are adjacent to each other, wherein sets of data are identified as being part of the initial candidate group of sets of data based on corresponding ones of the data points for the sets of data fitting into the same tile or in n-level neighbouring tiles of the spatial indexing system;
determining, from the sets of data within the identified initial candidate group of sets of data, a cluster of sets of data that relate to the same, first lane boundary by calculating respective distances between corresponding data points for different sets of data and comparing the calculated distances to a distance threshold; and
determining, using the cluster of sets of data that have been determined to relate to the same, first lane boundary, a geometry of the first lane boundary.

2. The method of claim 1,
wherein obtaining plural sets of data comprises obtaining plural sets of data in a first format and processing the obtained plural sets of data to a desired format, optionally wherein obtaining plural sets of data comprises, for each set of data of the plural sets of data:
determining that the observation of the lane boundary represented by the set of data extends beyond a geographical limit; and
dividing the set of data to form at least two sets of data, wherein one of the new sets of data is located entirely on one side of the geographical limit and the other one of the new sets of data is located entirely on the other side of the geographical limit; and/or
wherein obtaining plural sets of data comprises, for each set of data of the plural sets of data:
determining that the series of data points within the set of data are not equally spaced along the road section; and
resampling the set of data to obtain a set of data comprising a series of data points which are equally spaced along the road section; and, optionally,
wherein a tile size of the spatial indexing system is selected based on a resampling interval, optionally wherein the tile size of the spatial indexing system is selected such that successive data points in a set of data are located in the same tile or in n-level neighbouring tiles in the spatial indexing system.

3. The method of any preceding claim, wherein determining, from the sets of data within the identified initial candidate group, a cluster of sets of data that relate to the same, first lane boundary comprises:
calculating a Euclidian distance between a first data point from a first set of data of the initial candidate group and a corresponding first data point from a second set of data of the initial candidate group;
calculating a Euclidian distance between a second data point from the first set of data and a corresponding second data point from the second set of data;
determining that the first set of data and the second set of data should be clustered together as relating to the same, first lane boundary when the calculated distances fall below a desired comparison distance threshold, optionally wherein determining that the first set of data and the second set of data should be clustered together as relating to the same, first lane boundary comprises:
determining, based on the number of data points within the first set of data and/or the second set of data, a minimum number of corresponding data points for which a Euclidian distance is to be calculated;
calculating a Euclidian distance between the determined number of corresponding pairs of data points from the first set of data and the second set of data; and
determining that the first set of data and the second set of data should be grouped together as relating to the same, first lane boundary when all of the calculated distances fall below a desired comparison distance threshold.

4. The method of any preceding claim, wherein obtaining data comprises obtaining data from a plurality of separate journeys along the road section; and/or wherein the data in the plural sets of data is sensor data from on-board sensors.

5. The method of any preceding claim, further comprising:
generating a bounding box that encompasses the data points for all sets of data within the determined cluster; and
determining the geometry of the lane boundary using the generated bounding box, optionally wherein determining the geometry of the lane boundary using the generated bounding box comprises:
determining a centreline of the bounding box; and
using the determined centreline to determine the geometry of the lane boundary.

6. A method of determining a position of a lane centreline within a road section within a geographical area represented by a digital map, wherein the road section is divided into a set of one or more lanes each bounded by two lane boundaries, wherein each lane centreline indicates the midpoint between the two lane boundaries of a respective one of the one or more lanes, the method comprising:
obtaining plural sets of data representing a plurality of separate vehicle trajectories of vehicles travelling along respective portions of the road section, wherein different ones of the plural sets of data may represent different vehicle trajectories along the same or different lanes of the respective portions of the road section, wherein each set of data includes a respective series of data points spaced along the portion of the road section and representing the trajectory of a vehicle travelling along a particular lane of the portion of the road section;
identifying from the obtained plural sets of data an initial candidate group of sets of data for which it is to be further determined whether the sets of data should be clustered together as relating to the same, first lane centreline;
wherein the identifying of the initial candidate group of sets of data is performed using a spatial indexing system in which the geographical area including the road section is subdivided into a plurality of tiles, each representing a respective subarea of the geographical area, and wherein the positions of the tiles are spatially indexed relative to each other such that it can be determined which tiles are adjacent to each other, wherein sets of data are identified as being part of the initial candidate group of sets of data based on corresponding ones of the data points for the sets of data fitting into the same tile or in *n*-level neighbouring tiles of the spatial indexing system;
determining, from the sets of data within the identified initial candidate group of sets of data, a first cluster of sets of data that relate to the same, first lane centreline by calculating respective distances between corresponding data points for different sets of data and comparing the calculated distances to a distance threshold; and
determining, using the first cluster of sets of data that have been determined to relate to the same, first lane centreline, the position of the lane centreline.

7. The method of claim 6, wherein obtaining plural sets of data comprises obtaining plural sets of data in a first format and processing the obtained plural sets of data to a desired format, optionally wherein obtaining plural sets of data comprises, for each set of data of the plural sets of data:
determining that the series of data points within the set of data are not equally spaced along the road section; and
resampling the set of data to obtain a set of data comprising a series of data points which are equally spaced along the road section.

8. The method of claim 6 or 7, wherein the spatial indexing system is a hierarchical spatial indexing system comprising a first level having a first tile size and a second level having a second, smaller, tile size,
wherein each portion of the road section corresponds to an area covered by a respective tile of the first level of the spatial indexing system,
wherein obtaining plural sets of data comprises determining, for each set of data, one or more sets of data points, wherein each set of data points includes data points which fit within a respective tile of the first level, and
wherein the tiles used to identify the initial candidate group of sets of data are tiles of the second level, optionally wherein a tile size of the tiles of the first level of the spatial indexing system is selected based on a dimension of the road section.

9. The method of any of claims 6 to 8, wherein determining, from the sets of data within the identified first initial candidate group, a cluster of sets of data that relate to the same, first lane centreline comprises:
calculating a Euclidian distance between a first data point from a first set of data of the first initial candidate group and a corresponding first data point from a second set of data of the first initial candidate group;
calculating a Euclidian distance between a second data point from the first set of data and a corresponding second data point from the second set of data;
determining that the first set of data and the second set of data should be clustered together as relating to the same, first lane centreline when the calculated distances fall below a desired comparison distance threshold, optionally wherein determining that the first set of data and the second set of data should be clustered together as relating to the same, first lane centreline comprises:
determining, based on the number of data points within the first set of data and/or the second set of data, a minimum number of corresponding data points for which a Euclidian distance is to be calculated;
calculating a Euclidian distance between the determined number of corresponding pairs of data points from the first set of data and the second set of data; and
determining that the first set of data and the second set of data should be grouped together as relating to the same, first lane centreline when all of the calculated distances fall below a desired comparison distance threshold.

10. The method of any of claims 6 to 9, further comprising:
identifying that the road section comprises a road junction located in a subarea of the geographical area represented by the digital map, the road junction allowing one of a plurality of different routes to be taken by a vehicle passing through the road junction, wherein at least a portion of each of at least two of the plurality of different routes overlaps; and
performing processing to deduplicate the overlapping portions of the different routes, and/or
wherein the data in the plural sets of data is sensor data from on-board sensors; and/or wherein the data in the plural sets of data is GNSS data, such as GPS data.

11. The method of any of claims 6 to 10, further comprising:
generating a bounding box that encompasses the data points for all sets of data within the determined cluster; and
determining the position of the lane centreline using the generated bounding box; and, optionally,
wherein determining the position of the lane centreline using the generated bounding box comprises:
determining a centreline of the bounding box; and
using the determined centreline of the bounding box to determine the lane centreline.

12. The method of any of claims 1 to 5, further comprising updating the digital map to include the determined geometry of the first lane boundary; or
the method of any of claims 6 to 12, further comprising updating the digital map to include the determined lane centreline.

13. The method of any of the preceding claims, wherein a first data point of a first set of data is determined to correspond to a first data point of a second set of data based on a distance between the first data point of the first set of data and the first data point of the second set of data being shorter than a distance between the first data point of the first set of data and any other data point of the second set of data.

14. The method of any of the preceding claims, wherein
the spatial indexing system comprises a set of tiles that are regular polygons, such as a set of tiles that are regular hexagonal tiles, optionally wherein the spatial indexing system comprises an H3 indexing system, and/or
the method is performed in a distributed processing system comprising plural data processors configured to execute data processing operations, the method further comprising:
allocating data processing operations to respective ones of the plural data processors such that processing relating to an initial candidate group is performed by the same data processor.

15. A computer program product including a set of instructions that, when executed by one or more processors, will perform a method as claimed in any preceding claim, and/or an apparatus comprising one or more processors configured to perform a method as claimed in any preceding claim.
